Europäisches Patentamt

European Patent Office

Office européen des brevets

(19)

(11) EP 1 382 429 A1

(12) EUROPEAN PATENT APPLICATION

(43) Date of publication:
21.01.2004 Bulletin 2004/04

(51) Int Cl.$^7$: B29C 45/76

(21) Application number: 03253633.6

(22) Date of filing: 09.06.2003

| | |
|---|---|
| (84) Designated Contracting States:<br>AT BE BG CH CY CZ DE DK EE ES FI FR GB GR<br>HU IE IT LI LU MC NL PT RO SE SI SK TR<br>Designated Extension States:<br>AL LT LV MK | (72) Inventor: Yoshioka, Mitsushi<br>Minamitsuru-gun, Yamanashi 401-0502 (JP) |
| (30) Priority: 17.07.2002 JP 2002207958 | (74) Representative: Billington, Lawrence Emlyn<br>Haseltine Lake,<br>Imperial House,<br>15-19 Kingsway<br>London WC2B 6UD (GB) |
| (71) Applicant: Fanuc Ltd<br>Minamitsuru-gun, Yamanashi 401-0597 (JP) | |

(54) **Ejector unit of injection molding machine and method of detecting protrusion start position of ejector pin**

(57) A motor is driven in a state where the moving platen (22) of an injection molding machine is not mounted with a mold to protrude an ejector rod (27), and the driving current of the motor is measured for each predetermined protrusion position. Then, the moving platen (22) is mounted with a mold (28b) and the motor is driven to protrude the ejector rod (27), and the driving current of the motor is measured. It is determined that an ejector rod protrusion position where a difference between this measured current value and a current value stored in a data table becomes larger is the protrusion start position of an ejector pin.

FIG. 2

EP 1 382 429 A1

**Description**

The present invention relates to an ejector unit for protruding a molded product out of a mold in, for example, an electrically operated injection molding machine.

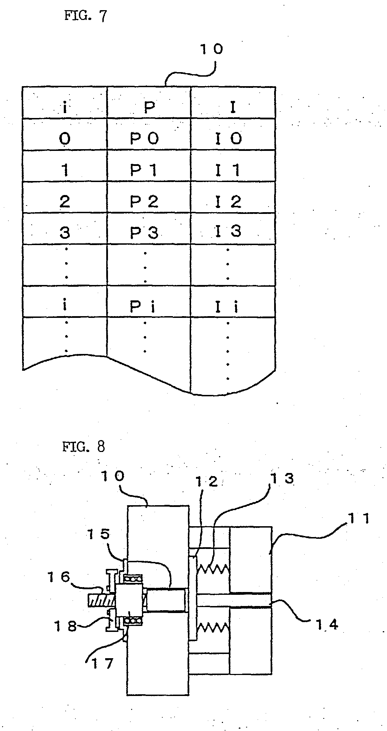

In an injection molding machine, an electrically operated ejector unit shown in Fig. 8 is generally used to protrude a molded product out of an opened mold. In the drawing, an ejector rod 15 is inserted into a through hole made in a moving platen 10. A ball screw 16 is coupled to the rear end of the ejector rod 15 and a nut 17 mounted on the moving platen 10 such that it can freely rotate and cannot move in an axial direction is screwed on the ball screw 16. A pulley 18 is fixed to the nut 17.

When a servomotor (not shown) disposed in the moving platen 10 is driven to rotate the pulley 18 via a belt, the nut 17 is rotated thereby to move the ball screw 16 backward and forward. When the ball screw 16 is moved forward, the ejector rod 15 is also moved forward to press an ejector plate 12 provided in a moving side mold 11 mounted on the moving platen 10 against the resilient force of a spring 13 thereby to protrude an ejector pin 14 fixed to the ejector plate 12 out of the moving side mold 11. As a result, the molded product held by the moving side mold is protruded off by the ejector pin 14.

Moreover, there has been also used an ejector unit which does not have its driving source, in which the ejector rod is protruded into the mold by making use of retraction of the moving platen to be occurred when the mold is opened.

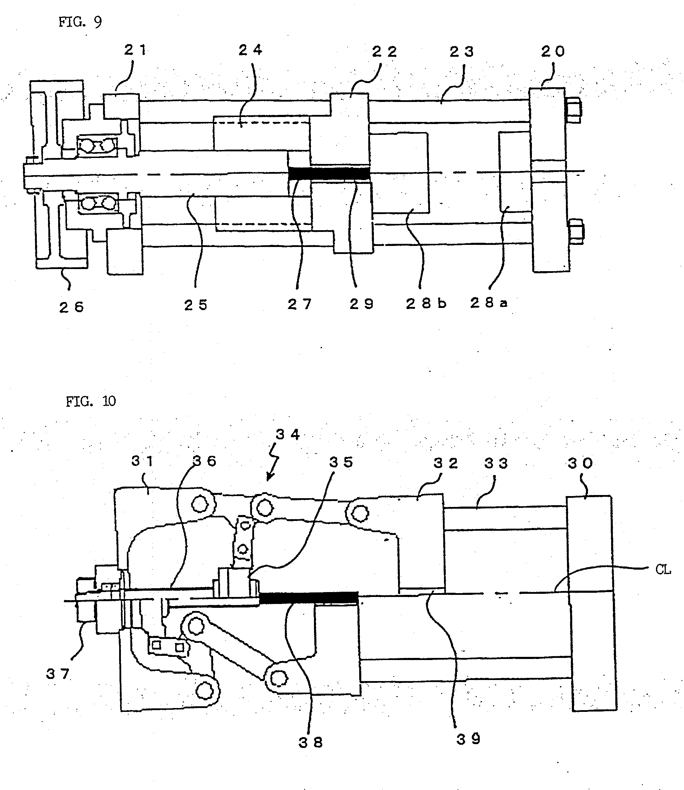

Fig. 9 is one example of an ejector unit used in a direct pressurizing type electrically operated mold clamping mechanism. In the drawing, a fixed platen 20 is connected to a rear platen 21 via a plurality of tie bars 23. A moving platen 22 is mounted on these tie bars 23 such that it can freely slide thereon. A nut 24 screwing on a ball screw 25 is fixed to the moving platen 22. The ball screw 25 is mounted on the rear platen 21 such that it cannot move in an axial direction and can freely rotates. A pulley 26 is fixed to the rear end of the ball screw 25 and an ejector rod 27 is fixed to the front end of the ball screw 25. The ejector rod 27 is inserted into a through hole 29 made in the moving platen 22.

When a mold clamping servomotor (not shown) is driven to rotate the pulley 26 via a belt, the ball screw 25 is rotated. The rotation of the ball screw 25 moves the nut 24 screwed on the ball screw 25 and the moving platen 22 integral with the nut 24 in the axial direction of the ball screw 25. This movement in the axial direction of the moving platen 22 moves a mold 28b mounted on the moving platen 22 near to or away from a mold 28a mounted on the fixed platen 20, that is, performs a mold closing/opening operation and a mold clamping operation.

When the moving platen 22 is retracted (moved in a left direction in Fig. 9) to open the mold and is moved near to a mold-opening end position, the ejector rod 27 is moved into the moving side mold 28b mounted on the moving platen 22 to press an ejector plate urged by a spring or the like against the resilient force of the spring. As a result, the ejector pin is protruded out of the mold 28b to protrude off the molded product.

Fig. 10 is an ejector unit of the type in which an ejector unit is added to a mold clamping mechanism. The example in Fig. 10 is different from the example having the direct pressurizing type mold clamping mechanism, shown in Fig. 9, in that it has a toggle type mold clamping mechanism.

A moving platen 32 is mounted between the fixed platen 30 and the rear platen 31 such that it can freely slide on a plurality of tie bars 33. The moving platen 32 is moved backward and forward (in a left and right direction in the drawing) by a toggle type mold clamping mechanism 34 provided between the fixed platen 30 and the rear platen 31 to open or close a mold and to fasten the mold. A nut 35 is fixed on the cross head of the toggle mechanism and screwed on a ball screw 36 mounted to the rear platen 31 such that it cannot move in an axial direction and can freely rotate. A pulley 37 is fixed to the rear end of the ball screw 36. The pulley 37 is rotated via a belt by the mold clamping servomotor (not shown) to rotate the ball screw 36 to move the nut 35 screwed on the ball screw 36 backward and forward to drive a toggle mechanism 34, thereby moving the moving platen 32 backward and forward.

An ejector rod 38 is mounted on the front end of the ball screw 36. When the moving platen 32 and a moving side mold mounted on the moving platen 32 are retracted (in the left direction in the drawing) to open the mold, the ejector rod 38 passes through a through hole 39 formed in the moving platen 32 to press an ejector plate in the moving side mold against the resilient force of a spring. As a result, the ejector pin protrudes out of the moving side mold to protrude off a molded product. Here, in Fig. 10, the upper side of a center line CL shows a lockup state where a toggle link is extended out and the lower side shows a maximum mold opening position where the toggle link is folded.

In various kinds of ejector units, because of a structural problem of the mold used or the like, the protrusion start position (position where the ejector rod abuts against the ejector plate in the mold) and the protrusion amount of the ejector pin need to be set. Conventionally, this setting work is performed by humans.

The above-mentioned setting is easily performed if dimensions of the mold are known, but the dimensions are unknown frequently. Moreover, if a wrong setting is performed by humans, it produces a bad effect on the mold and the injection molding machine.

Further, in the ejector unit of the type in which a specifically designed ejector unit is not provided but the ejector rod is protruded into the mold in accordance with the mold opening operation (types shown in Fig. 9 and Fig. 10), the setting of the protrusion position (relationship between the retraction position of the moving platen and the length of ejector rod mounted on the front end of the ball screw) is visually performed. Thus, this increases a possibility of performing a wrong setting.

It is the object of the present invention to automatically detect a protrusion start position. This may facilitate various kinds of settings of an ejector unit.

To automatically detect a protrusion start position, an ejector unit of an injection molding machine for driving an ejector rod by a motor, according to the present invention, comprises: detection means for detecting a driving current value of a motor for driving an ejector rod of the ejector unit; storage means for storing the driving current value of the motor for each predetermined ejector rod protrusion position or for each predetermined period, detected by driving the motor in a state where a moving platen is not mounted with a mold to protrude an ejector rod; and determination means for comparing the driving current value of the motor, detected by driving the motor in a state where a moving platen is mounted with a mold to protrude the ejector rod, with the driving current value for a corresponding protrusion position or for a number of predetermined periods stored in the storage means, and determining that a position where a difference between both of the driving current values exceeds a predetermined value is a protrusion start position of the ejector pin.

Moreover, to automatically detect a protrusion start position, an ejector unit in which an ejector rod is mounted on a ball screw shaft of a mold clamping mechanism of an injection molding machine that drives a ball screw of a ball screw/nut mechanism by a motor to drive a moving platen mounted on a nut thereby to fasten a mold, according to the present invention, comprises: detection means for detecting a driving current value of the motor; storage means for storing the driving current value of the motor for each predetermined position, detected by moving the moving platen from a state where the mold is closed to a state where the mold is open in a state where a moving platen is not mounted with the mold; and determination means for comparing the driving current value of the motor, detected by moving the moving platen from a state where the mold is closed to a state where the mold is open in a state where a moving platen is mounted with the mold, with the driving current value for a corresponding position stored in the storage means, and determining that a position where a difference between both of the driving current values exceeds a predetermined value is a protrusion start position of the ejector pin.

BRIEF DESCRIPTION OF THE DRAWINGS

    Fig. 1 is a block diagram of the control system of a servomotor for driving an ejector rod of an ejector unit of one embodiment of the present invention.

    Fig. 2 is charts showing a progression of the driving current of an ejector servomotor for driving the ejector rod of the ejector unit. Fig. 2(a) is a chart when the driving current is measured in a state where a moving platen is not mounted with a mold. Fig. 2(b) is a chart when the driving current is measured in a state where the moving platen is mounted with the mold.

    Fig. 3 is charts showing a progression of the driving current of a servomotor for making an ejector mechanism, incorporated into a toggle type mold clamping mechanism, perform an ejector operation. Fig. 3(a) is a chart when the driving current is measured in a state where the moving platen is not mounted with the mold. Fig. 3(b) is a chart when the driving current is measured in a state where the moving platen is mounted with the mold.

    Fig. 4 is a flow chart of a processing that measures the driving current of the servomotor in a state where the moving platen is not mounted with the mold and obtains the protruding position detection data of the ejector rod.

    Fig. 5 is a flow chart of a processing that measures the driving current of the ejector servomotor for driving the ejector unit and detects the protrusion start position of the ejector rod.

    Fig. 6 is a flow chart of a processing that measures the driving current of the servomotor for making the ejector mechanism, incorporated into a mold clamping mechanism, perform the ejector operation and detects the protrusion start position of the ejector rod.

    Fig. 7 shows one example of a data table of storing the protrusion position detection data of the ejector rod obtained by the processing in Fig. 4.

    Fig. 8 is a schematic view of the ejector unit having the ejector servomotor as a driving source.

    Fig. 9 is a schematic view of an ejector unit that has the ejector rod mounted at the front end of a ball screw of a direct pressurizing type mold clamping mechanism and performs the ejector operation by the use of the direct pressurizing type mold clamping mechanism.

    Fig. 10 is a schematic view of an ejector unit that has the ejector rod mounted at the front end of a ball screw of the toggle type mold clamping mechanism and performs the ejector operation by the use of the direct pressurizing mold clamping mechanism.

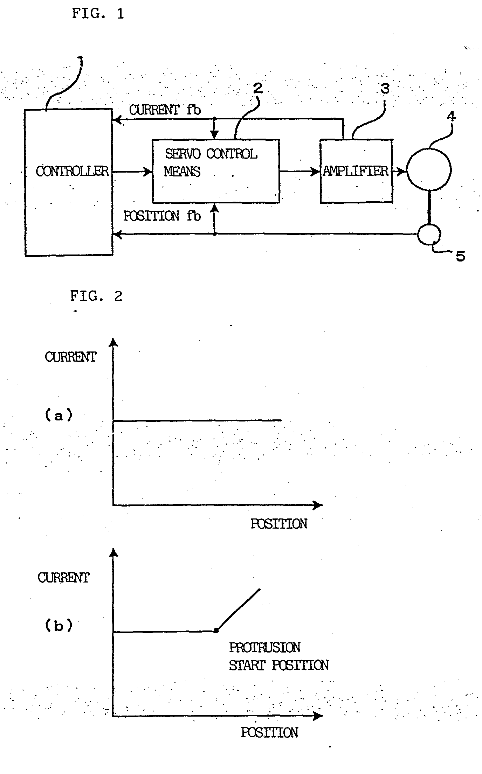

Fig. 1 is a block diagram of a control system of a servomotor 4 for driving an ejector rod of an ejector unit of one embodiment of the present invention. In case where the ejector unit used is the specifically designed ejector unit shown in Fig. 8 and its driving source is an ejector servomotor, then the ejector servomotor is the servomotor 4 shown in Fig. 1. On the other hand, in an ejector unit in which an ejector rod is caused to protrude into a moving mold in association with retraction of a moving platen driven by a mold clamping servomotor, as shown in Fig. 9 and Fig. 10, then the mold clamping servomotor is the servomotor 4 shown in Fig. 1.

A controller 1 for controlling an injection molding machine includes a processor, a memory such as a ROM and a RAM, an input/output circuit, a display device, and a data input device such as a keyboard, and the like. The servomotor 4 is driven and controlled by a command from servo control means 2 for controlling the position and speed of the servomotor 4. The servomotor 4 is provided with a position/speed detector 5 such as a pulse encoder. A feedback signal fb of position and speed is fed back to the servo control means 2 from this position/speed detector 5. Then, a feedback signal of position is fed back to the controller 1 from the position/speed detector 5. Further, a servo amplifier 3 constructed of an inverter of PWM control or the like is provided with a current detector (not shown). A detected driving current is fed back to the servo control means 2 and the controller 1 from the current detector.

Incidentally, a servomotor of the other mechanism not related to an ejector operation, such as an injection servomotor, in the injection molding machine is also provided with the above-mentioned servo control means, an amplifier, and the like, and they are connected to the controller 1. However, construction of these members does not directly relate to the present invention and hence will be omitted. Moreover, the control system shown in this Fig. 1 is not different from the control system of a conventional injection molding machine.

The present embodiment automatically detects the protrusion start position of an ejector pin by the use of such a control system as shown in Fig. 1.

Fig. 2 is a chart showing the detected driving current of the servomotor 4 obtained when, in the ejector unit driven by a specifically designed servomotor (servomotor for ejector) shown in Fig. 8, the servomotor (which is the servomotor 4 in Fig. 1) is driven to protrude an ejector rod 15 (see Fig. 8). Fig. 2(a) shows a current value detected when the servomotor 4 is driven in a state where the moving platen is not mounted with a mold. In this case, a load applied to the servomotor 4 is constant and a driving current of a nearly constant value is detected regardless of the stroke position of the ejector rod 15.

On the other hand, Fig. 2 (b) shows a current value detected when the servomotor 4 is driven in a state where the moving platen is mounted with the mold. In this case, the ejector rod 15 presses an ejector plate 12 against the force of a spring for urging the ejector plate 12 from a position where the ejector rod 15 abuts against the ejector plate 12 (Fig. 8). Thus, from this position, the load of the servomotor 4 increases, and the driving current increases. Therefore, the protrusion start position of the ejector pin can be found by detecting a position where this driving current increases.

Moreover, also in the ejector unit constructed such that an ejector rod 27 is arranged at the front end of a ball screw 25 of a direct pressurizing type mold clamping mechanism and that a molded product is protruded from a moving side mold 28b, the driving current of the mold clamping servomotor (which is the servomotor 4 in Fig. 1) for driving this direct pressurizing type mold clamping mechanism progresses in the manner shown in Fig. 2(a) and Fig. 2(b). In this case, the stroke position of the ejector rod 27 is represented on the assumption that a position where a moving platen 22 contacts with a fixed platen 20 is an origin and that a direction in which the moving platen 22 is retracted is a positive direction.

Even in a case where the servomotor 4 in Fig. 1 is the mold clamping servomotor, as described above, the driving current of the mold clamping servomotor 4 progresses in the manner shown in Fig. 2 (a) when the servomotor 4 drives the mold clamping mechanism in a state where the moving platen 22 is not mounted with the mold. As shown in this figure, the load applied to the servomotor 4 is constant and hence the driving current becomes nearly constant regardless of the stroke position. On the other hand, when the mold 28b is mounted on the moving platen 22 and opened, as shown in Fig. 2 (b), the driving current starts to increase from the time when the ejector rod 27 abuts against the ejector plate in the mold and receives the load. By detecting a position where the driving current starts to increase, the protrusion start position of the ejector pin can be found.

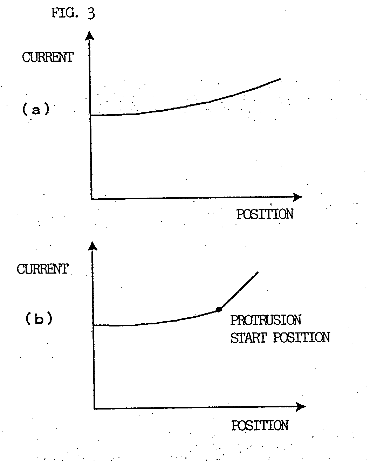

Fig. 3 shows detection results of the driving current of the mold clamping servomotor (which is the servomotor 4 in Fig. 1) for driving the toggle type mold clamping mechanism in Fig. 10, in the ejector unit having an ejector rod 38 at the front end of a ball screw 36 of the toggle type mold clamping mechanism.

Fig. 3(a) shows the progression of the driving current detected when the mold clamping servomotor is driven in a state where a moving platen 32 is not mounted with the mold. The driving current changes depending on the stroke position of the ejector rod 38 due to the characteristics of the toggle mechanism. On the other hand, Fig. 3(b) shows the progression of the driving current detected when the mold clamping servomotor is driven in a state where the moving platen 32 is mounted with the mold. Incidentally, in the case shown in Fig. 3, the stroke position of an ejector rod 38 is represented on the assumption that the most advanced position of the moving platen locked up by extending out the link of the toggle mechanism is an origin and that a direction in which the moving platen 22 is retracted is a positive direction.

As shown in Fig. 3(b), when the moving platen is retracted and the ejector rod mounted on the front end of the ball screw abuts against the ejector plate in the mold to increase the load, the driving current value starts to increase abruptly. Thus, the current value shown in Fig. 3(b) is significantly different from the current value shown in Fig. 3(a) from the stroke position of the ejector where the driving current starts to increase abruptly. Therefore, a position where the driving current value starts to increase can be found as the protrusion start position of the ejector pin.

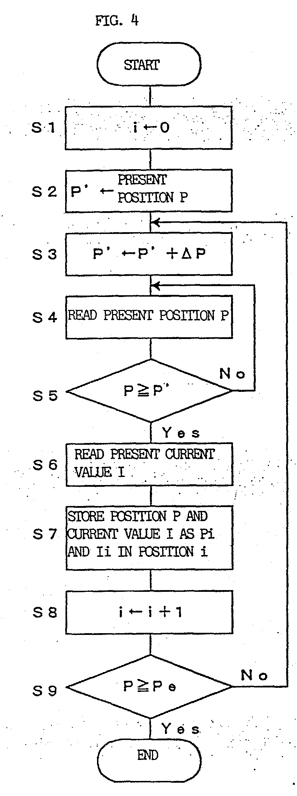

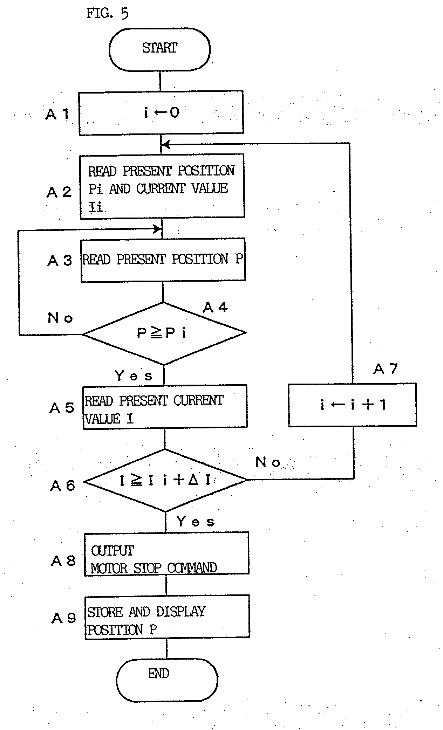

Fig. 4 and Fig. 5 are flow charts of the processing executed by a processor of the controller 1 so as to detect a position where this driving current starts to increase.

First, the ejector rod is positioned at the origin of the stroke in a state where the moving platen is not mounted with the mold. That is, in the ejector unit shown in Fig. 8 having the specifically designed servomotor (servomotor for ejector) as a driving source, the ejector rod 15 is placed at a position retracted farthest away from a mold 11. In the ejector unit mounted in the direct pressurizing mold clamping mechanism shown in Fig. 9, the moving platen is located at the most advanced position (on the fixed platen side). Moreover, in an ejector unit incorporated into a toggle type mold clamping mechanism shown in Fig. 10, the ejector rod is located at a position where the toggle mechanism is locked up and the moving platen reaches the most advanced position.

Then, when a protrusion position detection data obtaining command is inputted to the controller 1, the processor of the controller 1 outputs a moving command to the servo control means 2 to drive the servomotor 4. In a case where the servomotor 4 is an ejector servomotor for driving the ejector unit shown in Fig. 8, the processor outputs a moving command to move the ejector rod to a target position Pe of the maximum protrusion position of the ejector rod to drive the servomotor. Moreover, in an ejector unit incorporated into a mold clamping mechanism shown in Fig. 9 and Fig. 10, the processor outputs a moving command to move the moving platen to a target position Pe of the maximum retraction position of the ejector rod to drive the mold clamping servomotor in a direction in which the moving platen is retracted (in a direction in which the mold is opened).

Then, the protrusion position detection data obtaining processing shown in Fig. 4 is started. First, an indicator i is set at "0" (step S1). A present position P found based on a feedback signal from the position/speed detector 5 is read from a present position register and stored as a current detection position P' in the register (step S2). Then, a predetermined amount of unit ΔP set for the position P' is added to the current detection position P' to update the current detection position P' (step S3).

Next, the present position is read from the present position register and it is determined whether or not the position P reaches the current detection position P' and the program waits until the present position P reaches the current detection position P' (steps 34 and S5). When the present position P reaches the current detection position P', a detected driving current value I fed back from the current detector is read (step S6).

Then, the detected position Pi and current value Ii are stored in correspondence with the indicator i of the table 10, shown in Fig. 7, provided in a memory such as a nonvolatile RAM in the controller (step S7). Then, the indicator i is incremented by 1 (step S8). Then, it is determined whether or not the present detection position P reaches the target position Pe (step S9). If the present detection position P does not reach the target position Pe, the program returns to the step S3 where the predetermined amount of unit ΔP is added to the current detection position P' and proceeds to the following steps.

Thereafter, the processing from the step S4 to step S9 are repeatedly executed until the present detection position P reaches the target position Pe to obtain the data table 10 of the detected current values Ii with respect to the positions Pi shown in Fig.7.

In case of an ejector unit of Fig. 8 which has an ejector servomotor and an ejector unit of Fig. 9 which is incorporated into a direct pressurizing type mold clamping mechanism, the relationship between the position and the driving current obtained form the data table 10 is represented by the progression shown in the graph of Fig. 2(a). Moreover, in case of an ejector unit of Fig. 10 which is incorporated into a toggle type mold clamping mechanism, the relationship between the position and the driving current is represented by the progression shown in the graph of Fig. 3(a).

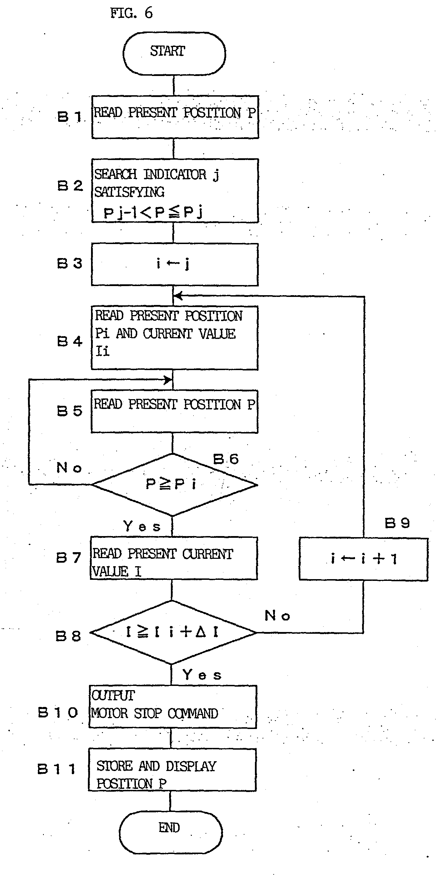

Here, the protrusion position detection data obtaining processing shown in Fig. 4 may be performed every time the mold is changed. However, it is considered that the protrusion position does not change as far as the position coordinates system of a servomotor (that is, an ejector servomotor in case of an ejector unit shown in Fig. 8, otherwise an servomotor for mold clamping mechanism in case of an ejector unit shown in Figs. 9 and 10) does not change. Thus, a protrusion position may be measured once when a position coordinates system is set and the table shown in Fig. 6 may be stored in the memory.

Next, the ejector rod is positioned at the origin of the stroke in a state where the moving platen is mounted with the mold. Then, the protrusion position detection data obtaining command is inputted to the controller 1. Then, the controller 1 outputs a moving command to the servo control means 2 and drives the servomotor 4 in a direction in which the ejector rod is protruded and, at the same time, the processor of the controller 1 starts the protrusion start position obtaining processing shown in Fig. 5.

First, the indicator i is set at "0" (step A1) and then the position Pi and the current value Ii that are stored in correspondence with the indicator i are read from the table 10 (step A2). Then, the present position P is read from the present position register and it is determined whether or not the present position P reaches the position Pi read from the table 10 and the program waits until the present position P reaches the position Pi (step A3, A4). When the present position P reaches the position Pi read from the table 10, the detected current value I that is fed back is read and it is determined whether or not the detected current value I is not less than the sum of the current value Ii read from the table 10 and a predetermined allowance ∆I (step A6). In a state where the ejector rod does not abut against the ejector plate, the load applied to the servomotor 4 is the same level as in a state where the mold is not mounted, so that the detected current value does not increase to the sum of the current value Ii stored in the table 10 and the allowance ∆I. Thus, if the detected current value I is less than(Ii + ∆I), the program proceeds to a step A7 where the indicator i is incremented by 1 and returns to the step A2. Thereafter, processing from the step A2 to the step A7 are repeatedly executed until the detected current value I is not less than the sum of the current value Ii read from the table 10 and the predetermined allowance ∆I.

When the ejector rod abuts against the ejector plate to increase the load applied to the servomotor 4 thereby to increase the driving current value I, as shown in Fig. 2(b), and it is detected that the driving current value I reaches the sum of the current value Ii read from the table 10 at the step A6 and the predetermined allowance ∆I, a command for stopping driving the servomotor 4 is output and the present position P is stored as the protrusion start position of the ejector pin and is displayed on a display device of the controller 1 (steps A8, A9), and the processing is terminated.

When the protrusion start position is found in this manner, the maximum protrusion position of the ejector rod and the like can be easily set based on the protrusion start position.

Further, in case of an ejector unit incorporated into the mold clamping mechanism shown in Fig. 9 and Fig. 10, the mold is mounted and positioned in a state where the mold is closed and then the protrusion start position obtaining command is inputted to the controller 1. Then, the controller 1 outputs a moving command to the servo control means 2 and drives the servomotor 4 in a direction in which the mold is opened and the processor of the controller 1 starts the protrusion start position obtaining processing shown in Fig. 6.

First, the present position P is read from the present position register (step B1) and it is determined which region of the position stored in the table 10 the present position P belongs to. That is, an indicator j satisfying the following inequality is detected (step B2).

$$P_{j-1} < P \leq P_j$$

The detected indicator j is set at the indicator i (step B3). That is, for the position Pi stored in the table 10, a position $P_j$ that is larger than and closest to a position where this protrusion start position obtaining processing is started is found, and the value of the indicator j corresponding to this position is set to the indicator i. The following steps from B4 to B11 are the same as the steps A2 to A9 shown in Fig. 5, so that their descriptions will be omitted.

In the above-mentioned embodiment, the protrusion start position is detected by comparing the current values with respect to the rotational position of the servomotor. However, in case where the injection molding machine has an ejector unit driven by an ejector servomotor, as shown in Fig. 8, a protrusion start position may be detected by detecting and comparing the driving currents of the servomotor produced when driving the servomotor at a constant speed in a state where the mold is mounted and further in a state where the mold is not mounted.

As shown in Fig. 8, whether the moving platen 10 is mounted with the mold 11 or not, the load applied to the servomotor is almost the same, until the ejector rod 15 abuts against the ejector plate 12. For this reason, the ejector rod 15 is located at a predetermined retracted position in a state where the moving platen 10 is not mounted with the mold 11, and the servomotor is driven at a constant speed so that the driving current of the servomotor is detected for each predetermined period and stored in correspondence with the period. In this case, only the detected driving current value I is stored in correspondence with a suffix i indicating the number of period in the table shown in Fig. 7, and the position P is not stored.

Next, the ejector rod 15 is located at the above predetermined retracted position in a state where the moving platen 10 is mounted with the mold 11, and the servomotor is driven at the constant speed so that the driving current of the servomotor is detected for each predetermined period. Then, the detected driving current is compared with the stored driving current value of the corresponding period stored in the table 10 and when the difference between them becomes a predetermined value or more, it is determined that the present position of the ejector rod 15 is the protrusion start position. For example, the processing from the step A5 to step A7 shown in Fig. 5 are executed for each predetermined period and when the driving current value is equal to or more than the stored current value, the present position P at that time is read and the processing of the steps A8 and A9 are executed to detect the protrusion start position.

As described above, according to the present enbodiments, the protrusion start position of an ejector pin can be automatically determined. Therefore, it is possible to easily set various positions of the ejector operation such as the maximum protrusion position based on the determined protrusion start position, and hence it is possible to reduce errors in setting.

**Claims**

1. An ejector unit of an injection molding machine, the ejector unit comprising:

   detection means for detecting a driving current value of a motor for driving an ejector rod of the ejector unit;
   storage means for storing the driving current value of the motor for each predetermined ejector rod protrusion position, detected by driving said motor in a state where a moving platen is not mounted with a mold to protrude an ejector rod; and
   determination means for comparing the driving current value of the motor, detected by driving said motor in a state where a moving platen is mounted with a mold to protrude said ejector rod, with the driving current value for a corresponding protrusion position stored in the storage means, and determining that a position where a difference between both of the driving current values exceeds a predetermined value is a protrusion start position of the ejector pin.

2. An ejector unit of an injection molding machine, the ejector unit comprising:

   detection means for detecting a driving current value of a motor for driving an ejector rod of the ejector unit;
   storage means for storing the driving current value of said motor for each predetermined period, detected by driving said motor at a constant speed from a predetermined position in a state where a moving platen is not mounted with a mold to protrude an ejector rod; and
   determination means for comparing the driving current value of said motor, detected for a predetermined period by driving the motor from the predetermined position in a state where a moving platen is mounted with a mold to protrude said ejector rod, with the driving current value for a corresponding period stored in the storage means, and determining that a position corresponding to a period where a difference between both of the driving current values exceeds a predetermined value is a protrusion start position of the ejector pin.

3. A method of detecting a protrusion start position of an ejector pin of an ejector unit in an injection molding machine, the method comprising the steps of;
   driving a motor of the ejector unit in a state where a moving platen is not mounted with a mold to protrude an ejector rod and storing a driving current value of the motor for each predetermined protrusion position; and

   mounting the mold on the moving platen and driving the motor of the ejector unit to protrude the ejector rod, comparing a detected driving current value of the motor with a driving current value of a stored corresponding protrusion position, and determining that a position where a difference between both of the driving current values exceeds a predetermined value is a protrusion start position of the ejector pin.

4. A method of detecting a protrusion start position of an ejector pin of an ejector unit in an injection molding machine, the method comprising the steps of;
   driving a motor of the ejector unit in a state where a moving platen is not mounted with a mold from a predetermined position at a constant speed to protrude an ejector rod and storing a driving current value of the motor for each predetermined period; and
   mounting the mold on the moving platen, driving the motor of the ejector unit from a predetermined position to protrude the ejector rod, detecting a driving current value of the motor for each predetermined period, comparing a detected driving current value of the motor with a driving current value of a stored corresponding period, and determining that a position corresponding to the period where a difference between both of the driving current values exceeds a predetermined value is a protrusion start position of the ejector pin.

5. An ejector unit in which an ejector rod is mounted on a ball screw shaft of a mold clamping mechanism of an injection molding machine that drives a ball screw of a ball screw/nut mechanism by a motor to drive a moving platen mounted on a nut thereby to clamp a mold, the ejector unit comprising:

   detection means for detecting a driving current value of the motor;
   storage means for storing the driving current value of said motor for each predetermined position, detected by moving the moving platen from a state where the mold is closed to a state where the mold is open in a state where a moving platen is not mounted with the mold; and
   determination means for comparing the driving current value of said motor, detected by moving the moving platen from a state where the mold is closed to a state where the mold is open in a state where a moving platen is mounted with the mold, with the driving current value for a corresponding position stored in said storage means, and determining that a position where a difference between both of the driving current values exceeds a predetermined value is a protrusion start position of the ejector pin.

6. A method of detecting a protrusion start position of an ejector pin in an ejector unit in which an ejector rod is mounted on a ball screw shaft of a mold clamping mechanism of an injection molding machine that drives a ball screw of a ball screw/nut mechanism by a motor to drive a moving platen mounted on a nut thereby to clamp a mold, the method comprising the steps of:

driving said motor in a state where the moving platen is not mounted with the mold to protrude the ejector rod and storing a driving current value of the motor for each predetermined protrusion position; and

mounting the mold on the moving platen and driving the motor to protrude the ejector rod, comparing a detected driving current value of the motor with a driving current value of a stored corresponding protrusion position, and determining that a position where a difference between both of the driving current values exceeds a predetermined value is a protrusion start position of an ejector pin.

FIG. 1

CURRENT fb

2    3    4

CONTROLLER → SERVO CONTROL MEANS → AMPLIFIER → ○

POSITION fb

5

FIG. 2

CURRENT

(a)

POSITION

CURRENT

(b)

PROTRUSION
START POSITION

POSITION

FIG. 3

CURRENT

(a)

POSITION

CURRENT

(b)

PROTRUSION
START POSITION

POSITION

FIG. 4

```
                    ┌──────────┐
                    │  START   │
                    └────┬─────┘
                         │
    S 1        ┌─────────────────────┐
               │        i ← 0         │
               └──────────┬──────────┘
                          │
    S 2        ┌─────────────────────┐
               │        PRESENT      │
               │  P' ←  POSITION P   │
               └──────────┬──────────┘
                          │
    S 3        ┌─────────────────────┐◄───────────┐
               │    P' ← P' + ΔP     │            │
               └──────────┬──────────┘            │
                          │◄──────────────┐       │
    S 4        ┌─────────────────────┐    │       │
               │ READ PRESENT POSITION P │ │       │
               └──────────┬──────────┘    │       │
                          │               │       │
    S 5            ◇─────────────◇   No    │       │
                  ◇    P ≧ P'     ◇────────┘       │
                   ◇─────────────◇                 │
                          │ Yes                     │
    S 6        ┌─────────────────────┐             │
               │ READ PRESENT CURRENT │             │
               │ VALUE I             │             │
               └──────────┬──────────┘             │
                          │                         │
    S 7        ┌─────────────────────┐             │
               │ STORE POSITION P AND │             │
               │ CURRENT VALUE I AS Pi│             │
               │ AND Ii IN POSITION i │             │
               └──────────┬──────────┘             │
                          │                         │
    S 8        ┌─────────────────────┐             │
               │       i ← i + 1      │             │
               └──────────┬──────────┘             │
                          │                         │
    S 9            ◇─────────────◇   No             │
                  ◇    P ≧ Pe     ◇─────────────────┘
                   ◇─────────────◇
                          │ Yes
                    ┌──────────┐
                    │   END    │
                    └──────────┘
```

FIG. 5

```
            ┌─────────────┐
            │    START     │
            └──────┬──────┘
                   │
     A 1    ┌──────┴──────┐
            │    i ← 0     │
            └──────┬──────┘
                   │←──────────────────────────┐
            ┌──────┴───────────────┐           │
            │ READ PRESENT POSITION │           │
     A 2    │ Pi AND CURRENT VALUE  │           │
            │ Ii                    │           │
            └──────┬───────────────┘           │
                   │                            │
            ┌──────┴───────────────┐           │
     A 3    │ READ PRESENT POSITION P│          │
            └──────┬───────────────┘           │
          ┌────────┤                            │
          │      ◇─┴──────◇  A 4                │
       No │      ◇  P ≧ P i ◇                   │
          │      ◇──────────◇                   │
          │         │ Yes                        │
          │  ┌──────┴───────────────┐  A 7      │
     A 5  │  │ READ PRESENT CURRENT  │  ┌────────┴─────┐
          │  │ VALUE I               │  │   i ← i + 1   │
          │  └──────┬───────────────┘  └──────────────┘
          │         │                          │
          │      ◇──┴──────────◇      No        │
     A 6  │      ◇ I ≧ I i + Δ I ◇─────────────┘
          │      ◇──────────────◇
          │         │ Yes
          │  ┌──────┴───────────────┐
     A 8  │  │ OUTPUT                │
          │  │ MOTOR STOP COMMAND    │
          │  └──────┬───────────────┘
          │         │
          │  ┌──────┴───────────────┐
     A 9  │  │ STORE AND DISPLAY     │
          │  │ POSITION P            │
          │  └──────┬───────────────┘
          │         │
          │  ┌──────┴──────┐
          │  │     END      │
          │  └─────────────┘
```

FIG. 6

```
                    ┌─────────────┐
                    │    START    │
                    └──────┬──────┘
                           │
         ┌──────────────────────────────────┐
  B 1    │ READ PRESENT POSITION P           │
         └──────────────┬───────────────────┘
                        │
         ┌──────────────────────────────────┐
  B 2    │ SEARCH INDICATOR j                │
         │ SATISFYING                        │
         │ P j-1 < P ≦ P j                   │
         └──────────────┬───────────────────┘
                        │
         ┌──────────────────────────────────┐
  B 3    │            i ← j                  │
         └──────────────┬───────────────────┘
                        │
         ┌──────────────────────────────────┐
  B 4    │ READ PRESENT POSITION             │
         │ Pi AND CURRENT VALUE              │
         │ Ii                                │
         └──────────────┬───────────────────┘
                        │
         ┌──────────────────────────────────┐
  B 5    │ READ PRESENT POSITION P           │
         └──────────────┬───────────────────┘
                        │
     No          ◇ P ≧ P i ◇    B 6
   ←─────────────     │
                     Yes
                      │
         ┌────────────────────────┐    B 9  ┌─────────────┐
  B 7    │ READ PRESENT CURRENT    │        │  i ← i + 1  │
         │ VALUE I                 │        └─────────────┘
         └────────────┬───────────┘
                      │
                ◇ I ≧ I i + Δ I ◇    No
  B 8           │
               Yes
                │
         ┌────────────────────────┐
  B 10   │ OUTPUT                  │
         │ MOTOR STOP COMMAND      │
         └────────────┬───────────┘
                      │
         ┌────────────────────────┐
  B 11   │ STORE AND DISPLAY       │
         │ POSITION P              │
         └────────────┬───────────┘
                      │
              ┌───────────────┐
              │     END       │
              └───────────────┘
```

FIG. 7

10

| i | P | I |
|---|---|---|
| 0 | P 0 | I 0 |
| 1 | P 1 | I 1 |
| 2 | P 2 | I 2 |
| 3 | P 3 | I 3 |
| : | : | : |
| i | P i | I i |
| : | : | : |

FIG. 8

FIG. 9

FIG. 10

# EP 1 382 429 A1

**European Patent Office**

## EUROPEAN SEARCH REPORT

**Application Number**

EP 03 25 3633

---

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | PATENT ABSTRACTS OF JAPAN vol. 013, no. 274 (M-841), 23 June 1989 (1989-06-23) -& JP 01 071722 A (NISSEI PLASTICS IND CO), 16 March 1989 (1989-03-16) * the whole document * --- | 1-6 | B29C45/76 |
| A | US 2002/005599 A1 (MATSUBAYASHI HARUYUKI ET AL) 17 January 2002 (2002-01-17) * the whole document * --- | 1-6 | |
| A | EP 1 072 386 A (FANUC LTD) 31 January 2001 (2001-01-31) * the whole document * --- | 1-6 | |
| A | EP 1 147 874 A (SUMITOMO HEAVY INDUSTRIES) 24 October 2001 (2001-10-24) * the whole document * ----- | 1-6 | |

**TECHNICAL FIELDS SEARCHED (Int.Cl.7)**

B29C

---

The present search report has been drawn up for all claims

| Place of search | Date of completion of the search | Examiner |
|---|---|---|
| MUNICH | 18 September 2003 | Brunswick, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

16

**ANNEX TO THE EUROPEAN SEARCH REPORT
ON EUROPEAN PATENT APPLICATION NO.**                    EP 03 25 3633

This annex lists the patent family members relating to the patent documents cited in  the above-mentioned European search report.
The members are as contained  in the European Patent Office EDP file on
The European Patent Office is in no way liable for these particulars which are merely  given for the purpose of information.

18-09-2003

| Patent document cited in search report | | Publication date | Patent family member(s) | | Publication date |
|---|---|---|---|---|---|
| JP 01071722 | A | 16-03-1989 | JP | 1735875 C | 26-02-1993 |
|  |  |  | JP | 4022417 B | 17-04-1992 |
| US 2002005599 | A1 | 17-01-2002 | JP | 2002018924 A | 22-01-2002 |
|  |  |  | DE | 10133442 A1 | 21-02-2002 |
| EP 1072386 | A | 31-01-2001 | JP | 2001038775 A | 13-02-2001 |
|  |  |  | EP | 1072386 A2 | 31-01-2001 |
|  |  |  | US | 6527534 B1 | 04-03-2003 |
| EP 1147874 | A | 24-10-2001 | JP | 2001300993 A | 30-10-2001 |
|  |  |  | CN | 1318461 A | 24-10-2001 |
|  |  |  | EP | 1147874 A2 | 24-10-2001 |
|  |  |  | TW | 508297 B | 01-11-2002 |
|  |  |  | US | 2001031288 A1 | 18-10-2001 |

For more details about this annex : see Official Journal of the European Patent Office, No. 12/82